# EUROPÄISCHE PATENTSCHRIFT

(11) **EP 2 226 592 B1**
(45) Veröffentlichungstag und Bekanntmachung des Hinweises auf die Patenterteilung: **02.11.2011**
(21) Anmeldenummer: 09003118.8
(22) Anmeldetag: 04.03.2009
(51) Int. Cl.: F24J 2/14, F24J 2/54

(54) **Elektrohydraulische Nachführvorrichtung für einen Solargenerator**
Electrohydraulic tracking device for a solar generator
Dispositif hydroélectrique de poursuite pour un générateur solaire

(43) Veröffentlichungstag der Anmeldung: 08.09.2010
(73) Patentinhaber: HAWE Hydraulik SE, 81673 München (DE)
(72) Erfinder: Hundschell, Hilarius, 84424 Isen (DE)
(74) Vertreter: Grünecker, Kinkeldey, Stockmair & Schwanhäusser

(56) Entgegenhaltungen:
- EP-A- 1 985 867
- DE-A1- 10 022 236
- DE-A1-102005 018 987
- DE-A1-102006 040 962

## Beschreibung

Die Erfindung betrifft eine elektrohydraulische Nachführvorrichtung für einen Solargenerator gemäß Oberbegriff des Patentanspruchs 1.

In Solarkraftwerken mit beispielsweise sogenannten Solarrinnen ist es seit Jahren gängige Praxis, den Parabolreflektor der beispielsweise über 100 m langen Solarrinne mittels zweier Hydraulikzylinder schrittweise dem Sonnenstand nachzuführen. Nach einem Sonnentag wird die Solarrinne mittels der Hydraulikzylinder in eine Ausgangsposition für den Sonnenaufgang zurückgeführt. Die Solarrinne wird beispielsweise jeweils nach 20 Sekunden für zwei Sekunden nachgeführt. Aufgrund des beispielsweise 210° oder mehr betragenden Gesamtverstellbereichs während eines Sonnentags werden für die Drehverstellung zwei versetzt angelenkte Hydraulikzylinder benötigt, um eine nicht definierte Totpunktlage zu vermeiden, die mit nur einem Hydraulikzylinder aufträte. Hierbei ist es bekannt, zwischen der Druckquelle und den Hydraulikzylindern zwei 4/3-Wegeschieberventile anzuordnen, von denen jedes zwei Betätigungsmagneten aufweist. In einer Neutralstellung sind beide durch Lasthalteventile abgesicherten Arbeitsleitungen jedes Hydraulikzylinders gemeinsam zum Reservoir druckentlastet. Aufgrund der relativ langen Verstellwege jedes 4/3-Wegeschieberventils, der auch dadurch bedingten, erheblichen Masse des Schieberkolbens, und wegen erforderlicher schneller Ventilschaltzeiten werden relativ leistungsstarke und teure Betätigungsmagneten benötigt. Eine grundsätzliche Anforderung an solche elektrohydraulische Nachführvorrichtungen kann eine sehr lange, störungsfreie Lebensdauer von beispielsweise mindestens 12 bis sogar 20 Jahren sein. Jeder Schaltzyklus eines Betätigungsmagneten ist zwangsweise mit Verschleiß verbunden. Da bei der bekannten Nachführvorrichtung für jeden Nachführzyklus zwei Betätigungsmagneten bestromt werden müssen, ist auch entsprechender Verschleiß unvermeidbar, der die Lebensdauer unerwünscht begrenzt.

Aus DE 100 22 236 A ist eine elektrohydraulische Nachführvorrichtung für Solargeneratoren bekannt, mit der Nachführzyklen um zwei Verstellachsen (Azimutachse und Elevationsachse) mittels zwei abwechselnd betätigter Hydraulikzylinder ausgeführt werden. Der Solargenerator weist ein Solarpaneel auf, das an einer drehbaren Säule kippbar abgestützt ist. Zwischen den Hydraulikzylindern und der Druckquelle sind zwei 312-Wegeschaltventile jeweils mit einem Betätigungsmagneten und ein 212-Wegeschaltventil mit nur einem Betätigungsmagneten für eine Bremse angeordnet. Bei einem Nachführzyklus der Säule wird nur ein Betätigungsmagnet bestromt, und wird die Stellrichtung durch die Antriebsrichtung der die Druckquelle bildenden Pumpe gewählt. Bei einem Nachführzyklus der Kippstellung werden zwei Betätigungsmagneten bestromt, und wird die jeweilige Stellrichtung durch die Antriebsrichtung der Pumpe gewählt. Da abwechselnd Nachführzyklen der Säule und der Kippverstellung ausgeführt werden, ergibt sich eine große Zahl an Schaltvorgängen der Betätigungsmagneten mit unvermeidbarem Verschleiß, der die Lebensdauer begrenzt.

Der Erfindung liegt die Aufgabe zugrunde, eine elektrohydraulische Nachführvorrichtung der eingangs genannten Art anzugeben, deren Lebensdauer aufgrund reduzierten Verschleißes verlängert ist.

Die gestellte Aufgabe wird mit den Merkmalen des Patentanspruchs 1 gelöst.

Da trotz der beiden Hydraulikzylinder für jeden Nachführzyklus nur ein Betätigungsmagnet bestromt wird, reduziert sich der durch Schaltzyklen der Betätigungsmagneten bedingte Verschleiß und ist die Lebensdauer verlängert. Dazu kommt, dass die Wegeschaltventile, insbesondere 4/2-Wegschaltventile, klein bauen und über nur kurze Wege leicht verstellbar sind, sodass trotz schneller Ventitschaltzeiten relativ leistungsschwache Betätigungsmagneten verwendbar sind, was zu einer weiteren Verschleiß-Reduzierung beiträgt. Der Vorteil, für einen Nachführzyklus jeweils nur einen Betätigungsmagneten bestromen zu müssen, resultiert auch aus der über die Wegeschaltventile gewählten Verschaltung der Hydrautikzyiinder, von denen erst bei Bestromen des Betätigungsmagneten die jeweils für die gewünschte Verstellrichtung erforderliche Kammerbeaufschlagung im Hydraulikzylinder geändert wird. Unabhängig davon, ob bei einem Nachführzyklus beide Hydraulikzylinder eingezogen oder ausgefahren werden, oder einer eingezogen und der andere ausgefahren wird, ist stets nur ein Betätigungsmagnet zu bestromen. Bei z.B. 13 Millionen vorausgesetzter Nachführzyklen werden demzufolge verschleißmindemd nur 6,5 Millionen Magnetschaltvorgänge ausgeführt.

Um ungewollte Verstellungen zu vermeiden, wird zweckmäßig in den Arbeitsleitungen zwischen dem 4/2-Wegeschaltventil und dem jeweiligen Hydraulikzylinder ein Paar überkreuz hydraulisch entsperrbarer Lasthalteventile angeordnet.

Im Hinblick auf möglichst idealen Gleichlauf beider Hydraulikzylinder ist die Druckquelle eine Zweikreispumpe, vorzugsweise mit einem gemeinsamen Antriebsmotor, wobei, vorzugsweise, jeder Kreis mit einem Druckbegrenzungsventil zum Reservoir abgesichert ist. Die Druckbegrenzungsventile vermeiden Schäden, falls eine Nachführbewegung augrund eines äußeren Einflusses nicht ausführbar sein sollte.

Bei einer zweckmäßigen Ausführungsform weist die Zweikreispumpe zwei über eine gemeinsame Antriebswelle vom Antriebsmotor angetriebene Radialkolbenpumpen-Sätze auf. Radialkolbenpumpen bieten z. B. Vorteile hinsichtlich Verschleiß und Lebensdauer. Um Druckoszillationen zu vermeiden, kann jeder Satz beispielsweise mehrere PumpenElemente umfassen. Es kann auch Zahnradpumpe, wenigstens eine z. B. Zahnrad-Tandempumpe, vorgesehen sein.

Im Hinblick auf Wartungsfreundlichkeit und einfache Montage ist die Druckquelle mit dem Antriebsmotor und dem Reservoir in einem ein Gehäuse aufweisenden Motorpumpenaggregat zusammengefasst. Zumindest die 4/2-Wegeschaltventile können an oder in dem Gehäuse montiert sein. Das Motor-Pumpenaggregat wird an geeigneter Stelle installiert. Es brauchen dann nur noch die Leitungen zu den Zylindern verlegt werden.

Bei einer zweckmäßigen Ausführungsform ist zwischen jedem 4/2-Wegeschaltventil und der Druckquelle eine Druckweiche angeordnet. Die Druckweiche isoliert druckabhängig bei abgeschalteter Druckquelle die Druckquelle von den Hydraulikzylindern, und verbindet die ohnedies nicht über das 4/2-Wegeschaltventil mit dem Reservoir verbundene Arbeitsleitung mit dem Reservoir, um ungewollte Verstellbewegungen der Hydraulikzylinder zu vermeiden. Es kann nämlich bei Abschalten des Antriebsmotors der Zweikreispumpe ein einige Millisekunden dauernder Nachlauf stattfinden, der zu einem Druckaufbau und möglicherweise ungewollten Verstellbewegungen führen könnte. Die Druckweiche ist allerdings eine Option, die nicht unbedingt erforderlich ist.

Alternativ könnten beide Hydraulikzylinder auch aus einer gemeinsamen Druckquelle, z.B. einer Einkreispumpe, gespeist werden, gegebenenfalls über eine Druckweiche.

Im Hinblick auf geringen Einbauraum und bequeme Vormontage werden zumindest die beiden 4/2-Wegeschaltventile in einem Ventilblock vereinigt oder in Blockbauweise zusammengefügt.

Um trotz kurzer Schaltzeiten relativ leistungsarme Betätigungsmagneten verwenden zu können, ist es zweckmäßig, das 4/2-Wegeschaltventil als Schieberventil auszubilden, dessen in einer Schieberbohrung verstellbarer Schieberkolben bezüglich der quer zur Verstellrichtung anstehenden Drücke druckausgeglichen sein sollte, sodass er wie in einer hydrodynamischen Lagerung sehr leichtgängig verstellbar ist und auch keinem merkbaren Verschleiß unterliegt. Sitzventile könnten ebenfalls verwendet werden, obwohl sie gegebenenfalls teurer als Schiebeventile sind.

Anhand der Zeichnungen werden Ausführungsformen des Erfindungsgegenstandes erläutert. Es zeigen:
- Fig. 1: eine Schemadarstellung eines Solargenerators,
- Fig. 2: ein Blockschaltbild einer elektrohydraulischen Nachführvorrichtung für bei- spielsweise den Solargenerator von Fig. 1, in drucklosem Zustand,
- Fig. 3: eine weitere Ausführungsform einer Nachführvorrichtung als Blockschalt- bild, und
- Fig. 4: eine Schemadarstellung eines Details der elektrohydraulischen Nachführ- vorrichtung, und
- Fig. 5 und 6: Alternativen zu Fig. 2 und 3 mit einer Einkreispumpe.

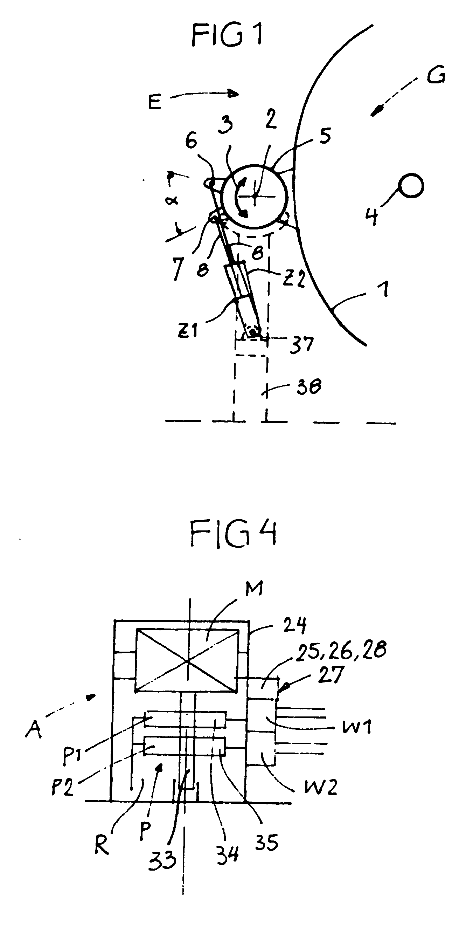

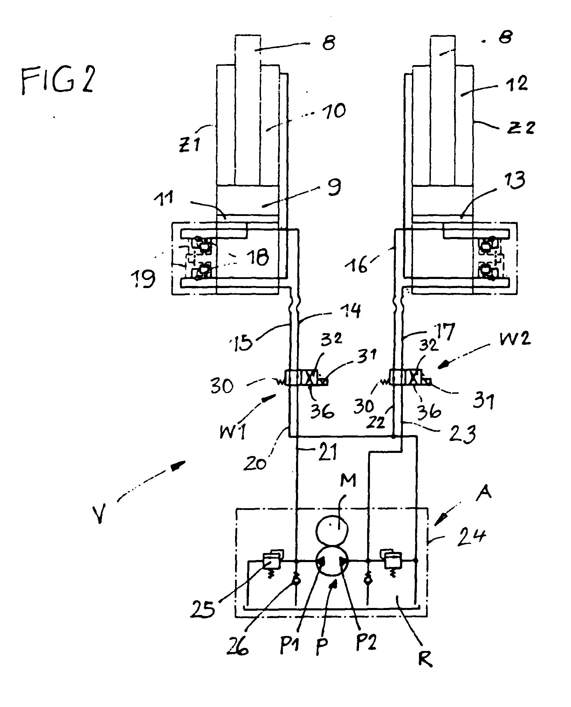

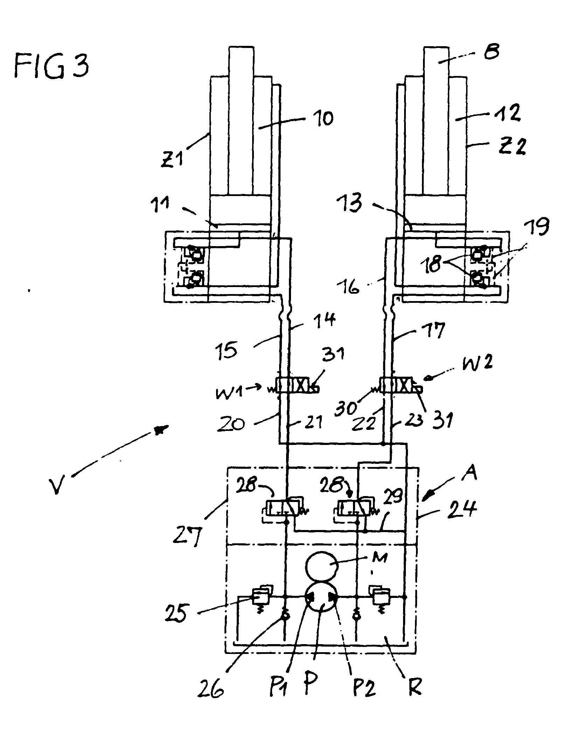

Ein Solargenerator G in Fig. 1 weist beispielsweise eine sogenannte Solarrinne E mit einem Parabolreflektor 1 auf, in dessen Brennpunktbereich ein Absorberrohr 4 positioniert ist. Der Parabolreflektor 1 ist um eine Drehachse 2 schwenkbar, um dem Sonnenstand entsprechend nachgeführt werden. Um Nachführzyklen auszuführen (und auch um den Parabolreflektor 1 nach einem Sonnentag in eine Ausgangsposition zurückzuführen), sind zwei doppelt wirkende Hydraulikzylinder Z1, Z2 an einem die Drehachse 2 enthaltenden Solargeneratorteil 5 mit einer gegenseitigen Versetzung α (z.B. 20°) in Anlenkpunkten 6, 7 mit ihren Kolbenstangen 8 angelenkt. Die Hydraulikzylinder Z1, Z2 stützen sich in einem Widerlager 37 einer Tragsäule 38 des Solargenerators G ab. Zum Verstellen des Solargenerators G ist eine elektrohydraulische Nachführvorrichtung V beispielsweise gemäß Fig. 2 oder Fig. 3 vorgesehen.

In Fig. 2 weist jeder Hydraulikzylinder Z1, Z2 beiderseits eines Kolbens 9 eine kolbenstangenseitige Kammer 10 bzw. 12 und eine kolbenseitige Kammer 11 bzw. 13 auf. Die Kammem jedes Hydraulikzylinders Z1, Z2 sind über Arbeitsleitungen 14, 15 bzw. 16, 17 an ein Wegeschaltventil W1, W2, insbesondere ein 4/2-Wegeschaltventil, angeschlossen. In den Arbeitsleitungen 14, 15 bzw. 16, 17 sind jeweils zwei Lasthalteventile 18 angeordnet, die überkreuz mittels Vorsteuerleitungen 19 hydraulisch entsperrbar sind.

Vom 4/2-Wegeschaltventil W1 führt eine Reservoirleitung 20 zu einem Reservoir R. Eine Reservoirleitung 22 vom anderen 4/2-Wegeschaltventil W2 ist an die Reservoirleitung 20 angeschlossen.

Das Reservoir R ist zusammen mit einem Antriebsmotor M und einer Druckquelle P, beispielsweise einer Einkreispumpe (nicht gezeigt) oder einer Zweikreispumpe P1, P2 in einem Motorpumpenaggregat A angeordnet, das ein das Reservoir R bildendes Gehäuse 24 besitzt. Von den beiden Pumpenstufen P1, P2 der Zweikreispumpe führen Druckleitungen 21, 23 zu den 4/2-Wegeschaltventilen W1, W2, wobei Rückschlagventile 26 und Druckbegrenzungsventile 25 für jeden Pumpenkreis vorgesehen sind. Die beiden 4/2-Wegeschaltventile W1, W2 könnten an das Gehäuse 24 angebaut oder in dieses eingliedert sein.

Jedes 4/2-Wegeschaltventil W1, W2 kann ein Vierwege/Zweistellungs-Schieberventil mit einem Kolbenschieber 32 sein, der in einer Schieberbohrung 36 linear verstellbar ist, und in einer Verstellrichtung durch eine Rückstellfeder 30 und in der entgegengesetzten Verstellrichtung durch einen Betätigungsmagneten 31 beaufschlagbar ist, oder ein Sitzventil mit einem Schließelement.

Der Schieberkolben 32 kann in einem Schiebeventil (nicht gezeigt), vorzugsweise, für die jeweiligen Strömungswege Umfangsnuten aufweisen, um quer zur Verstellrichtung bezüglich der anstehenden Drücke druckausgeglichen und somit leicht verstellbar zu sein.

Gemäß Fig. 2 (und Fig. 3) sind die beiden Hydraulikzylinder Z1, Z2 so verschaltet, dass in den durch die Rückstellfedern 30 eingestellten Schaltstellungen (bei nichtbestromten Betätigungsmagneten 31) die Arbeitsleitung 14 zur kolbenseitigen Kammer 11 des Hydraulikzylinders Z1 und die Arbeitsleitung 17 zur kolbenstangenseitigen Kammer 12 des anderen Hydraulikzylinders Z2 jeweils mit der Druckquelle P verbunden sind. Hingegen sind die kolbenstangenseitige Kammer 10 und die kolbenseitige Kammer 13 über die Lasthalteventile 18 mit dem Reservoir R verbunden. Diese Ruheposition-Verschaltung könnte bezüglich der beiden Hydraulikzylinder Z1, Z2 auch umgekehrt gewählt werden.

Um aus der in Fig. 1 angedeuteten Position des Solargenerators G bei Sonnenaufgang einen Nachführzyklus auszuführen, wird in der Schaltstellung gemäß Fig. 2 der Antriebsmotor M eingeschaltet, sodass beide Pumpenstufen P1, P2 Druckmittel fördern und die Druckleitungen 21, 23 unter Druck setzen. Gleichzeitig wird, da die Kolbenstangen 8 beider Hydraulikzylinder Z1, Z2 einzufahren sind (Fig. 1), beim in Fig. 2 linken 4/2-Wegeschaltventil W1 dessen Betätigungsmagnet 31 bestromt. Nach Umschalten des Wegeschaltventils W1 gegen die Rückstellfeder 30 wird die Druckleitung 21 mit der Arbeitsleitung 15 zur kolbenstangenseitigen Kammer 10 des Hydraulikzylinders Z1 verbunden, hingegen die kolbenseitige Kammer 11 über die andere Arbeitsleitung 14 mit der Reservoirleitung 20 verbunden. Der Hydraulikzylinder Z2 ist ohne Bestromung des Betätigungsmagneten bereits passend verschaltet. Beide Hydraulikzylinder Z1, Z2 führen unter Einfahren der Kolbenstangen 8 einen Nachführzyklus über eine bestimmten Zeitdauer aus, über welche nur der Betätigungsmagnet 31 des 4/2-Wegeschaltventils W1 bestromt bleibt. Danach wird der Antriebsmotor M stillgesetzt und der Betätigungsmagnet 31 des 4/2-Wegeschaltventils W1 wieder stromlos gemacht, sodass wieder der Zustand gemäß Fig. 2 eintritt. Bei solchen Nachführzyklen begrenzen die Druckbegrenzungsventile 25 den jeweiligen Systemdruck auf einen vorbestimmten Wert, z.B. 130 bar. Während eines Nachführzyklus wird das Lasthalteventil 18 in der gerade mit dem Reservoir R verbundenen Arbeitsleitung aus der gerade mit der Druckquelle P verbundenen Arbeitsleitung hydraulisch entsperrt. Nach jedem Nachführzyklus stehen beide Lasthalteventile 18 in ihren Sperrstellungen, sodass der Hydraulikzylinder Z1, Z2 hydraulisch gegen eine Verstellung unter einer Last blockiert ist.

In etwa zur Mittagszeit oder abhängig vom höchsten Sonnenstand erreicht der mit der Versetzung α in Fig. 1 voreilende Hydraulikzylinder Z1 bezüglich der Drehachse 2 eine Totpunktlage, über die er jedoch dank der Versetzung vom anderen Hydraulikzylinder Z2 hinweggeführt wird. Bis dahin wurden beide Kolbenstangen 8 in Fig. 1 eingezogen. In einer Übergangsphase, in der sich der Solargeneratorteil 5 schrittweise weiter gegen den Uhrzeigersinn dreht, fährt die Kolbenstange 8 des nacheilenden Hydraulikzylinders Z2 bis zum Erreichen der Totpunktlage ein, während die Kolbenstange 8 des voreilenden Hydraulikzylinders Z1 ausfährt. Nachdem auch der Hydraulikzylinder Z1 über die Totpunktlage gebracht, fahren bis zum Sonnenuntergang beide Kolbenstangen 8 aus. Der Gesamtdrehbereich kann etwa 210° betragen. Nach Sonnenuntergang wird der Solargenerator G in die Position für den Sonnenaufgang zurückgebracht.

Ist die Kolbenstange 8 des Hydraulikzylinders Z2 auszufahren, dann wird in der Stellung gemäß Fig. 2 der Betätigungsmagnet 31 des rechten 4/2-Wegeschaltventils W2 in etwa mit Einschalten des Antriebsmotors M für die Dauer des Nachführzyklus bestromt, sodass die kolbenseitige Kammer 13 des Hydraulikzylinders Z2 über die Arbeitsleitung 16 mit der Druckleitung 23 verbunden wird, während gleichzeitig die kolbenstangenseitige Kammer 12 über die Arbeitsleitung 17 mit der Reservoirleitung 23 verbunden ist.

In der elektrohydraulischen Nachführvorrichtung V sind demzufolge insgesamt nur zwei Betätigungsmagneten 31 vorgesehen, und wird bei jedem Nachführzyklus nur einer der Betätigungsmagneten 31 bestromt.

Die Ausführungsform der elektrohydraulischen Nachführvorrichtung V in Fig. 3 unterscheidet sich von der von Fig. 2 dadurch, dass in dem Motorpumpenaggregat A in jeder Druckleitung 21, 23 eine Druckweiche 28 angeordnet ist. Beide Druckweichen 28 sind über eine gemeinsame Leitung 29 an die Reservoirleitung 20 angeschlossen, in Stellrichtung zu einer Schaltstellung, in der die jeweilige Druckleitung 21 bzw. 23 mit der Leitung 29 verbunden und die Druckquelle P isoliert ist, durch eine Rückstellfeder belastet, und in beiden Stellrichtungen jeweils aus Vorsteuerleitungen von der Pumpenseite bzw. der Schaltventilseite vorgesteuert. Wird kein Nachführzyklus ausgeführt, nehmen die Druckweichen 28 die in Fig. 3 gezeigten Stellungen ein. Wird ein Nachführzyklus initiiert, dann steuert der von der Druckquelle P aufgebaute Druck in der Druckleitung 21 bzw. 23 die Druckweiche 28 um, sodass die Druckquelle P mit dem jeweiligen 4/2-Schaltventil W1 und W2 verbunden ist, hingegen die Verbindung zur Leitung 29 unterbrochen wird. Sobald der Antriebsmotor M abgeschaltet wird, wird aufgrund eines Restdrucks in der Druckleitung 21 bzw. 23 und hauptsächlich der Wirkung der Rückstellfeder wieder die in Fig. 3 gezeigte Schaltstellung hergestellt, in der die Druckquelle isoliert ist, und die Druckleitungen 21, 23 über die Leitung 29 mit der Reservoirleitung 20 verbunden sind.

Die Funktion bei der Ausführung der Nachführzyklen entspricht der anhand von Fig. 2 erläuterten.

Fig. 4 verdeutlicht schematisch die Ausbildung des Motorpumpenaggregats A, das in den Ausführungsformen der Fig. 2 und 3 Verwendung finden kann. In dem Gehäuse 24 ist der Antriebsmotor M (z. B. ein Unterölmotor) angeordnet, der mit einer Antriebswelle 33 die Pumpenstufen P1 und P2 gemeinsam antreibt. Jede Pumpenstufe P1 und P2 ist beispielsweise ein Satz 35, 34 aus beispielsweise drei oder mehreren Radialkolbenpumpen-Elementen, die im Inneren des Gehäuses 24 montiert und saugseitig mit dem vom Gehäuse 24 definierten Reservoir R verbunden sind. Druckseitig sind die Pumpenstufen P1, P2 mit einem Ventilblock 27 verbunden, der im oder am Gehäuse 24 montiert ist, und zumindest die Rückschlagventile 26, Druckbegrenzungsventile 25 und gegebenenfalls die Druckweichen 28 sowie, zweckmäßig, auch die beiden 4/2-Wegeschaltventile W1 und W2 enthält, die in einem Block 27 angeordnet oder zu einem Block 27 zusammengefügt sind. Die nicht hervorgehobenen Reservoirleitungen münden ebenfalls im Inneren des Gehäuses 24. In der Ausführungsform in Fig. 4 speist das Motorpumpenaggregat A nur die Nachführvorrichtung V eines Solargenerators G. Es könnten auch nur zwei einzelne Pumpenelemente vorgesehen sein, wobei z. B. ein Pumenhub die Fördermenge für einen Nachführzyklus bereitstellen könnte. Auch eine Zahnradpumpe oder Zahnrad-Tandempumpe wäre brauchbar. Bei nichtgezeigten alternativen Ausführungsformen und entsprechend leistungsstarker Ausbildung des Motorpumpenaggregats A könnten gleichzeitig mehrere Solargeneratoren mit einem Motorpumpenaggregat nachgeführt werden.

Die Steuerbefehle zum Einleiten und Abbrechen eines Nachführzyklus könnten beispielsweise von opto-elektronischen Sensoren generiert werden, die im Lichtweg des Parabolreflektors 1 zum Absorberrohr 4 hinter diesem abschaltbar platziert sind. Die Zeitdauer jedes Nachführzyklus kann alternativ/additiv durch ein Zeitglied einstellbar festgelegt werden.

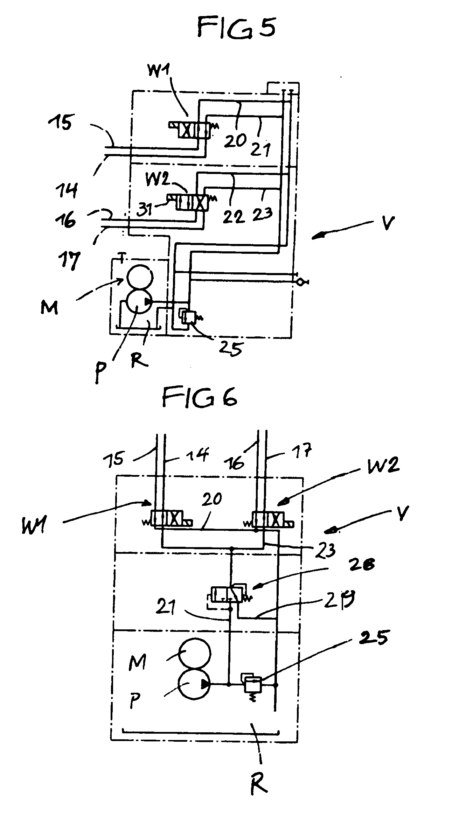

In den Fig. 5 und 6 sind Blockschaltbild-Teile für Nachführvorrichtungen V angedeutet, die analog zu Fig. 2 und 3 ausgelegt sind, jedoch mit einer Einkreispumpe als Druckquelle P gespeist werden, wobei in Fig. 5 keine Druckweiche, hingegen in Fig. 8 eine Druckweiche 28 zusätzlich zu einem Druckbegrenzungsventil 25 vorgesehen ist. In Fig. 5 ist der Betätigungsmagnet 31 des Wegeschaltventils W2 bestromt, sodass die Druckleitung 23 mit der Arbeitsleitung 17 mit der Reservoirleitung 22 verbunden sind.

## Patentansprüche

1. Elektrohydraulische Nachführvorrichtung (V) für einen Solargenerator (G), insbesondere einen Parabolreflektor einer Solarrinne (1) oder einen Fresnelreflektor, mit zwei mit gegenseitiger Versetzung (α) an einem schrittweise in Nachführzyklen verstellbaren Solargeneratorteil (5) angelenkten, doppelt wirkenden Hydraulikzylindern (Z1, Z2), deren jeweilige, mit einer kolbenstangenseitigen Kammer (10, 12) und einer kolbenseitigen Kammer (11, 13) verbundene Arbeitsleitungen (14-17) zumindest während eines Nachführzyklus über ein magnetbetätigtes Mehrwegeventil wahlweise mit einer Druckquelle (P) oder einem Reservoir (R) verbindbar sind, **dadurch gekennzeichnet, dass** für die Arbeitsleitungen (14, 15; 16, 17) jedes Hydraulikzylinders (Z1, Z2) ein Wegeschaltventil (W1, W2) mit einem gegen eine Rückstellfeder (30) arbeitenden Betätigungsmagneten (31) vorgesehen ist, dass die Arbeitsleitungen der zwei Hydraulikzy-linder so an die beiden Wegeschaltventile (W1, W2) abgeschossen sind, dass bei stromlosen Betätigungsmagneten (31) beider Schaltventile (W1, W2) die kolbenseitige Kammer (11 oder 13) eines Hydraulikzylinders (Z1, Z2) und die kolbenstangenseitige Kammer (10 oder 12) des anderen Hydraulikzylinders (Z2, Z1) mit der Druckquelle (P) verbunden sind, und dass während eines Nachführzyklus der Betätigungsmagnet (31) nur eines der beiden Wegeschaltventile (W1, W2) bestromt ist.

2. Elektrohydraulische Nachführvorrichtung nach Anspruch 1, **dadurch gekennzeichnet, dass** in den Arbeitsleitungen (14, 17) jeweils zwischen dem Wegeschaltventil (W1, W2) und dem Hydraulikzylinder (Z1, Z2) überkreuz hydraulisch entsperrbare Lasthalteventile (18) angeordnet sind, und dass jedes Wegeschaltventil (W1, W2) ein 4/2-Ventil in Schieber- oder Sitzbauweise.

3. Elektrohydraulische Nachführvorrichtung nach Anspruch 1, **dadurch gekennzeichnet, dass** die Druckquelle (P) eine Zweikreispumpe (P1, P2), vorzugsweise mit einem gemeinsamen Antriebsmotor (M) ist, wobei, vorzugsweise, jeder Kreis mit einem Druckbegrenzungsventil (25) zum Reservoir (R) abgesichert ist.

4. Elektrohydraulische Nachführvorrichtung nach Anspruch 3, **dadurch gekennzeichnet, dass** die Zweikreispumpe (P1, P2) zwei über eine gemeinsame Antriebswelle (33) vom Antriebsmotor (M) angetriebene Radialkolbenpumpen-Sätze (34, 35) aufweist.

5. Nachführvorrichtung nach Anspruch 3 oder 4 **dadurch gekennzeichnet, dass** die Druckquelle (P) mit dem Antriebsmotor (M) und dem Reservoir (R) in einem ein Gehäuse (24) aufweisenden Motorpumpenaggregat (A) zusammengefasst sind, und dass zumindest die Wegeschaltventile (W1, W2) am Gehäuse (24) montiert sind.

6. Elektrohydraulische Nachführvorrichtung nach Anspruch 1, **dadurch gekennzeichnet, dass** zwischen den Wegeschaltventilen (W1, W2) und der Druckquelle (P) zumindest eine Druckweiche (28) angeordnet ist, die druckabhängig bei abgeschalteter Druckquelle (P) die Druckquelle isoliert und eine nicht über das Wegeschaltventil (W1, W2) mit dem Reservoir (R) verbundene Arbeitsleitung (21, 23) mit dem Reservoir (R) verbindet.

7. Nachführvorrichtung nach wenigstens einem der vorhergehenden Ansprüche, **dadurch gekennzeichnet, dass** zumindest die beiden Wegeschaltventile (W1, W2) zu einem Ventilblock (27) vereinigt oder zusammengefügt sind.

8. Elektrohydraulische Nachführvorrichtung nach Anspruch 2 oder 7 **dadurch gekennzeichnet, dass** jedes 4/2-Wegeschaltventil (W1, W2) als Schieberventil mit einem in einer Schieberbohrung (36) verstellbaren Schieberkolben (32) ist, der in der Schieberbohrung (36) quer zur Verstellrichtung bezüglich der Drücke in den Arbeitsleitungen (14-17), einer Druckleitung (21, 23) und einer Reservoirleitung (20, 22) druckausgeglichen ist.

## Claims

1. Electrohydraulic tracking device (V) for a solar generator (G), in particular a parabolic reflector of a solar trough (1) or a Fresnel reflector, with two dual-acting hydraulic cylinders (Z1, Z2) hinged with mutual offset (a) on a solar generator part (5) that is incrementally adjustable in tracking cycles, the respective operating lines (14-17) of which hydraulic cylinders, connected to a piston rod-side chamber (10, 12) and a piston-side chamber (11, 13), at least during a tracking cycle can be connected via a multiway valve that is actuated by magnets optionally to a pressure source (P) or a reservoir (R), **characterized in that** for the operating lines (14,15; 16, 17) of each hydraulic cylinder (Z1, Z2) a directional control valve (W1, W2) is provided with an actuating magnet (31) operating against a return spring (30), that the operating lines of the two hydraulic cylinders are connected to the two directional control valves (W1, W2) such that, with currentless actuating magnets (31) of both control valves (W1, W2), the piston-side chamber (11 or 13) of a hydraulic cylinder (Z1, Z2) and the piston rod-side chamber (10 or 12) of the other hydraulic cylinder (Z2, Z1) are connected to the pressure source (P), and that during a tracking cycle the actuating magnet (31) of only one of the two directional control valves (W1, W2) is supplied with current.

2. Electrohydraulic tracking device according to claim 1, **characterized in that** load-holding valves (18), which can be unlocked hydraulically in a crosswise manner, are respectively arranged in the operating lines (14, 17) between the directional control valve (W1, W2) and the hydraulic cylinder (Z1, Z2), and that each directional control valve (W1, W2) is a 4/2 valve in slider construction or seated construction.

3. Electrohydraulic tracking device according to claim 1, **characterized in that** the pressure source (P) is a dual circuit pump (P1, P2), preferably with a common drive motor (M), wherein preferably each circuit is secured with a pressure-limiting valve (25) to the reservoir (R).

4. Electrohydraulic tracking device according to claim 3, **characterized in that** the dual circuit pump (P1, P2) has two radial piston pump sets (34, 35) driven by the drive motor (M) via a common drive shaft (33).

5. Tracking device according to claim 3 or 4, **characterized in that** the pressure source (P) is combined with the drive motor (M) and the reservoir (R) in a motor pump assembly (A) having a housing (24), and that at least the directional control valves (W1, W2) are mounted on the housing (24).

6. Electrohydraulic tracking device according to claim 1, **characterized in that** at least one pressure switchover (28) is arranged between the directional control valves (W1, W2) and the pressure source (P), which pressure switchover isolates the pressure source in a pressure-dependent manner when the pressure source (P) is switched off and connects an operating line (21, 23) not connected to the reservoir (R) via the direction control valve (W1, W2), to the reservoir (R).

7. Tracking device according to at least one of the preceding claims, **characterized in that** at least the two directional control valves (W1, W2) are combined or joined to form a valve block (27).

8. Electrohydraulic tracking device according to claim 2 or 7, **characterized in that** each 4/2 directional control valve (W1, W2) is a slider valve having a slider piston (32) adjustable in a slider bore (36), which slider piston is pressure-compensated in the slider bore (36) transversely to the adjustment direction regarding the respective pressures in the operating lines (14 - 17), in a pressure line (21, 23) and in a reservoir line (20, 22).

## Revendications

1. Dispositif d'orientation électro-hydraulique (V) pour un générateur solaire (G), en particulier un réflecteur parabolique d'un capteur solaire (1) ou un réflecteur de Fresnel, comprenant deux vérins hydrauliques (Z1, Z2) double effet articulés avec un décalage mutuel (α) sur une partie (5) de générateur solaire réglable pas à pas dans des cycles d'orientation, vérins dont les conduites de travail respectives (14 - 17) reliées à une chambre (10, 12) du côté tige de piston et à une chambre (11, 13) du côté piston peuvent être raccordées sélectivement par l'intermédiaire d'un distributeur à commande magnétique, au moins pendant un cycle d'orientation, à une source de pression (P) ou à un réservoir (R), **caractérisé en ce qu'**un distributeur (W1, W2) comprenant un aimant de commande (31) fonctionnant à l'encontre d'un ressort de rappel (30) est prévu pour les conduites de travail (14, 15 ; 16, 17) de chaque vérin hydraulique (Z1, Z2), que les conduites de travail des deux vérins hydrauliques sont raccordées aux deux distributeurs (W1, W2) de telle sorte que, dans l'état hors tension des aimants de commande (31) des deux distributeurs (W1, W2), la chambre du côté piston (11 ou 13) d'un vérin hydraulique (Z1, Z2) et la chambre du côté tige de piston (10 ou 12) de l'autre vérin hydraulique (Z2, Z1) soient reliées à la source de pression (P), et que l'aimant de commande (31) d'uniquement l'un des deux distributeurs (W1, W2) soit alimenté en courant pendant un cycle d'orientation.

2. Dispositif d'orientation électro-hydraulique suivant la revendication 1, **caractérisé en ce que** des vannes de maintien de ,charge (18) à déverrouillage hydraulique en croix sont respectivement disposées dans les conduites de travail (14, 17) entre le distributeur (W1, W2) et le vérin hydraulique (Z1, Z2) et que chaque distributeur (W1, W2) est un distributeur 4/2 du type à coulisse ou à siège.

3. Dispositif d'orientation électro-hydraulique suivant la revendication 1, **caractérisé en ce que** la source de pression (P) est une pompe à double circuit (P1, P2), de préférence avec un moteur de commande (M) commun, chaque circuit étant de préférence protégé jusqu'au réservoir (R) par une vanne de limitation de pression (25).

4. Dispositif d'orientation électro-hydraulique suivant la revendication 3, **caractérisé en ce que** la pompe à double circuit (P1, P2) comporte deux jeux de pompes à pistons radiaux (34, 35) entraînés par le moteur de commande (M) par l'intermédiaire d'un arbre moteur commun (33).

5. Dispositif d'orientation suivant l'une des revendications 3 et 4, **caractérisé en ce que** la source de pression (P) avec le moteur de commande (M) et le réservoir (R) sont réunis en un groupe motopompe (A) pourvu d'un carter (24), et que les distributeurs (W1, W2) au moins sont montés sur le carter (24).

6. Dispositif d'orientation électro-hydraulique suivant la revendication 1, **caractérisé en ce qu'**au moins un aiguillage de pression (28) est disposé entre les distributeurs (W1, W2) et la source de pression (P), lequel aiguillage isole la source de pression en fonction de la pression dans l'état coupé de la source de pression, et raccorde au réservoir (R) une conduite de travail (21, 23) non reliée au réservoir (R) par l'intermédiaire du distributeur (W1, W2).

7. Dispositif d'orientation suivant l'une au moins des revendications précédentes, **caractérisé en ce qu'**au moins les deux distributeurs (W1, W2) sont réunis ou assemblés en un bloc de vannes (27).

8. Dispositif d'orientation électro-hydraulique suivant l'une des revendications 2 et 7, **caractérisé en ce que** chaque distributeur 4/2 (W1, W2) est réalisé sous forme de vanne à coulisse avec un piston (32) mobile dans un alésage de coulisse (36), lequel piston est équilibré en pression dans l'alésage de coulisse (36) transversalement à la direction de déplacement quant aux pressions dans les conduites de travail (14 - 17), une conduite sous pression (21, 23) et une conduite de réservoir (20, 22).
